# EUROPÄISCHE PATENTANMELDUNG

(11) **EP 3 812 886 A1**
(43) Veröffentlichungstag der Anmeldung: **28.04.2021**
(21) Anmeldenummer: 19205074.8
(22) Anmeldetag: 24.10.2019
(51) Int. Cl.: G06F 8/41, G06F 8/51, G06F 8/72, G06N 3/12

(54) **SYSTEM UND VERFAHREN ZUR OPTIMIERUNG VON PROGRAMMIERCODE**

(71) Anmelder: Eberhard Karls Universität Tübingen, 72074 Tübingen (DE)
(72) Erfinder: Otte, Sebastian, 72827 Wannweil (DE)
(74) Vertreter: Valvoda, Jakob

(57) **Zusammenfassung**

Die vorliegende Erfindung betrifft ein computerimplementiertes Verfahren zum Optimieren von Programmcode in einer Programmiersprache, mit Umwandeln des Programmcodes in Zwischencode in einer abstrakten Zwischensprache, Identifizieren von Elementen des Zwischencodes und Extrahieren von bekannten optimierten Elementes aus einer Datenbank dafür. Diese optimierten Elemente werden dann im Kontext des Zwischencodes evaluiert und ersetzen dann gegebenenfalls das jeweilige identifizierte Element. Des Weiteren werden Elemente gesucht, die optimiert werden können. Diese werden sodann optimiert, und diese Optimierungen werden dann evaluiert und ersetzen gegebenenfalls das jeweilige gefundene Element. Anschließend wird der resultierende Zwischencodes in Programmcode zurück umgewandelt. Des Weiteren betrifft die vorliegende Erfindung ein System zum Optimieren von Programmcode in einer Programmiersprache, ein computerimplementiertes Verfahren zum Trainieren dieses Systems, ein System zum Trainieren dieses Systems, sowie ein Computerprogramm und ein Computerlesbares Medium.

## Beschreibung

### TECHNISCHES GEBIET

Die vorliegende Erfindung betrifft ein Verfahren und ein System zur Optimierung von Programmiercode, sowie ein Verfahren und ein System zum Trainieren eines Systems zum Optimieren von Programmcode.

### ALLGEMEINER STAND DER TECHNIK

Programmierung von Hard- und Software ist üblicher Weise eine von Programmierern oder Entwicklern ausgeübte Tätigkeit. Seit dem Einsatz von Programmiersprachen hat sich dieses Gebiet stetig weiterentwickelt. Jede Programmiersprache ist anders, basiert möglicherweise sogar auf anderen Paradigmen. Einige Programmiersprachen sind sich sehr ähnlich, andere unterscheiden sich stark voneinander.

Während zu Beginn der Programmierung Programme immer für das jeweilige Modell eines Rechners geschrieben wurden, müssen in letzter Zeit nicht nur Betriebssysteme verschiedener Anbieter (z.B. Microsoft®, Apple®, Google®, verschiedene UNIX-Derivate), Betriebssystemversionen (z.B. Windows 8® und Windows 10®, Mac OS X®, Android®, etc.) und Geräteklassen (z.B. Desktop-Rechner, Laptop-Rechner, Smartphones, Wearables, Tablets, sog. Smart-Home-Geräte, etc.), sondern auch vorherrschende Bedingungen innerhalb der Geräte, auf denen der programmierte Code laufen soll, beachtet werden.

Solche zu berücksichtigenden Bedingungen können z.B. der vorhandene Arbeitsspeicher (RAM), der verfügbare Arbeitsspeicher (RAM), vorhandene Cache-Speicher, Anzahl der vorhandenen Prozessoren und vorhandene Prozessortypen (z.B. Hauptprozessoren (CPU), Grafikprozessoren (GPU), (mathematische) Co-Prozessoren, Soundprozessoren, etc.) sowie die vorliegende Rechnerarchitektur sein.

Alle diese oben genannten Parameter können einen Einfluss auf die Ausführung von Programmiercode haben. Es ist schwierig für einen Programmierer, in einer Programmiersprache eine Optimierung von Code durchzuführen. Tatsächlich werde häufig bei der Programmierung Codefragmente aus eigenen, früheren Projekten oder auch aus anderen, frei zugänglichen Projekten anderer Programmierer sowie durch Austausch mit anderen entstandene Codefragmente eingesetzt. Insbesondere bei der letzten Variante, die häufig in Form von Diskussionen auf einschlägigen Diskussionsforen im Internet geführt werden, kann es sein, dass die letztlich verwendete Formulierung von einer Person stammt, die gar nicht alle Parameter der Programmierung des aktuellen Projektes kennen. Darüber hinaus, wenn mehrerer solcher kopierten Teillösungen zusammen verwendet werden, kann es sein, dass die darin verwendeten Grundsätze (wie Variablenbenennung, Schleifenerzeugung, Sprungbefehle, Speicherverwendung, Parameterweitergabe von Funktionen, etc.) sich voneinander unterscheiden.

Hierdurch wird häufig suboptimaler Code in Softwareprojekten erzeugt.

Programmiercode stellt sich häufig als Liste von Anweisungen dar, die als Algorithmus interpretiert werden kann. Das am Ende eines Software-Entwicklungsprojektes, oder auch eines Teilprojektes, entstandene Programm oder der entstandene Algorithmus ist also in aller Regel nicht optimal für die spezifischen Probleme, spezifische Zielarchitekturen und anderen Bedingungen innerhalb eines speziellen Systems.

Verschiedene Ansätze werden hier verfolgt, z.B. das Übersetzen von Programmiercode in eine abstrakte Zwischensprache (z.B. LLVM) zur Kompilierung der jeweiligen Zwischensprache auf dem Zielsystem, oder Optimierung mittels evolutionärer Algorithmen (z.B. genetischer Programmierung).

Die Ergebnisse der bekannten Technologien sind allerdings in der Regel dann für das einzelne Zielsystem speziell angepasst und nicht portable, d.h. für andere Systeme zu verwenden. Darüber hinaus erstellen bekannte Optimierungen fertigen Programmcode, so dass der Programmierer keine weiteren Anpassungen vornehmen kann, bzw. nach Anpassungen die Quelle erneut kompilieren muss.

Aufgabe der Erfindung ist es obenstehende Nachteile zu überwinden oder zumindest eine alternative Lösung zu bestehenden Optimierungen anzubieten.

### DARSTELLUNG DER ERFINDUNG

Die Erfindung löst diese Aufgabe gemäß den Verfahren und dem System der unabhängigen Patentansprüche. Vorteilhafte Weiterbildungen sind in den abhängigen Ansprüchen dargestellt. Dadurch werden die im Stand der Technik bekannten Nachteile überwunden.

### KURZBESCHREIBUNG DER ZEICHNUNG

Weitere Vorteile der Erfindung werden im Zusammenhang mit der Zeichnung in der folgenden Beschreibung erläutert. In der Zeichnung zeigt:
Fig. 1 ein Flussdiagramm eines erfindungsgemäßen Verfahrens zum Optimieren von Programmiercode entsprechend einem Ausführungsbeispiel,
Fig. 2 ein Diagramm eines erfindungsgemäßen Systems zum Optimieren von Programmcode in einer Programmiersprache entsprechend einem Ausführungsbeispiel,
Fig. 3 ein Flussdiagramm eines erfindungsgemäßen Verfahrens zum Trainieren eines Systems zum Optimieren von Programmcode entsprechend einem Ausführungsbeispiel, und
Fig. 4 ein Diagramm eines erfindungsgemäßen Systems zum Trainieren eines Systems zum Optimieren von Programmcode entsprechend einem Ausführungsbeispiel.

### AUSFÜHRLICHE BESCHREIBUNG

Die freie Formulierung von (optimiertem) Code ist für viele Programmierer aktuellen Untersuchungen zur Folge eine große Hürde. Die typische Arbeitsweise vieler Softwareentwickler beinhaltet das partielle Kopieren von Teillösungen für Aufgaben, die sie zu bewältigen haben. Diese Lösungen stammen beispielsweise von früheren eigenen Projekten oder von öffentlich zugänglichen Quellen wie Diskussionsforen oder Open Source Software. Diese Teillösungen sind aber meist nicht optimal für das spezielle Problem, da die Gegebenheiten und Besonderheiten möglicher Weise nicht berücksichtigt wurden. Solche Gegebenheiten können z.B. spezifische Probleme, spezifische Zielarchitekturen und/oder der den jeweilige Softwarekontext sein. Eine Optimierung wäre meist möglich wird aber mangels Zeit nicht durchgeführt.

Die vorliegende Erfindung umfasst ein Verfahren und ein System mit sogenannter Künstlicher Intelligenz (KI), das für ein gegebenes Stück Programmcode, z. B. eine zeitkritische Funktion oder ähnliches, durch gezielte Umformulierungen mittels eines intelligenten, selbstlernenden Teils, der mit einer, durch das Lernen mitwachsenden Datenbank verbunden ist, eine spezifisch optimierte Form der des Eingangscodes erzeugt. Diese optimierte Form kann einfache Optimierungen einschließen, die sich über typische Muster identifizieren lassen, aber auch komplexe Optimierungen, die, gestützt durch evolutionäre und/oder heuristische Prozesse und eine ständig lernende und somit wachsende Datenbank, gegebenenfalls vollständige Umformulierungen des Eingangscodes erzeugen. Dabei ist die Gewährleistung der semantischen Äquivalenz zu beachten.

Ein solches Verfahren oder System kann als Dienst, z.B. ein Webservice, oder als oder lokaler Prozess, z.B. ein Compiler der beispielsweise in eine vom Entwickler verwendete Entwicklungsumgebung eingebunden oder angebunden ist ausgeführt werden. Dabei kann die Eingabe des Codes lediglich eine nicht optimierte Rohfassung eines Algorithmus enthalten, welcher aber dann beispielsweise speziell für eine bestimmte Zielarchitektur optimiert wird und dem Entwickler in kurzer Zeit zur Verfügung steht.

Jede Anfrage an das System erzeugt durch die selbstlernende Qualität des Systems und des Verfahrens neue Muster und speichert diese in der Datenbank oder evaluiert bekannte Muster, die bereits in der Datenbank gespeichert sind, in bisher unbekanntem Kontext. Das führt zu einer ständigen Verbesserung des Systems und des Verfahrens.

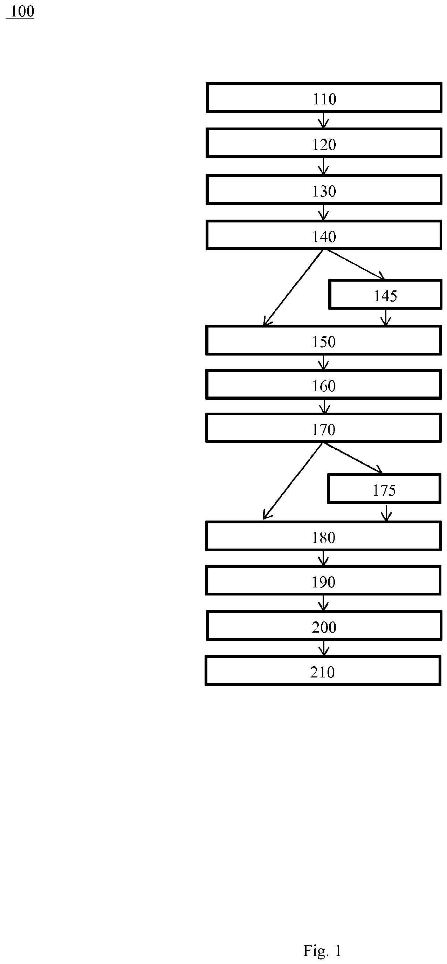

Figur 1 zeigt ein Flussdiagramm eines erfindungsgemäßen Verfahrens 100 zum Optimieren von Programmiercode, und darin wird in einem ersten Schritt 110 der Programmcode in Zwischencode in einer abstrakten Zwischensprache und/oder in eine abstraktere, strukturierte Repräsentation (z.B. ein abstrakter Syntaxbaum (engl.: abstract syntax tree (AST)) umgewandelt.

Diese Zwischensprache kann programmiersprachenunabhängig sein, kann jedoch auch einer konkreten Programmiersprache entsprechen.

Ein Beispiel einer solchen Zwischensprache ist LLVM. Die Abkürzung LLVM wurde eingeführt als "Low Level Virtual Machine", steht aber mittlerweile nicht mehr dafür, da LLVM auch für Virtualisierung genutzt werden kann. In LLVM sind verschiedene Compiler- und Low-Level-Techniken enthalten, die Zwischensprache wird mittlerweile auch mit LLVM-IR bezeichnet, wobei IR für "intermediate representation" steht.

In einem nächsten Schritt 120 wird in einer Datenbank nach Elementen des Zwischencodes, d.h. nach Teilen des Zwischencodes in der Zwischensprache, gesucht, für welche bekannte Optimierungen gespeichert sind. Diese Elemente des Zwischencodes werden identifiziert.

Wobei die in der Datenbank hinterlegten bekannten optimierten Elemente vorzugsweise in der Datenbank als funktional äquivalent zu Elementen definiert sind.

In der Datenbank finden sich in Abhängigkeit der Parameter, die angegeben werden können, also z.B. Zielarchitektur, Optimierungsziel (z.B. kurze Laufzeit oder wenig Speicherverbrauch), bekannte Optimierungen. Diese Optimierungen können aus der Datenbank abgerufen werden. In Schritt 120 wird aber zunächst ermittelt, ob der Zwischencode Elemente beinhaltet, für die in der Datenbank optimierte Elemente vorhanden sind. Das Identifizieren 120 der Elemente kann hierbei mittels heuristischer Verfahren durchgeführt werden, beispielsweise durch evolutionäre Algorithmen, insbesondere genetischer Programmierung, oder mittels Machine Learning, Deep Learning, generative Deep Neural Networks, DNNs oder regelbasiert. Außerdem kann ein Optimierungsziel zuvor festgelegt werden, und dementsprechend den Detailgrad der Zerlegung des Zwischencodes bestimmen.

Das heißt, vom Zwischencode werden einzelne Teile bis hin zum gesamten Algorithmus in suchbare Repräsentationen umgewandelt und es wird in der Datenbank systematisch nach bekannten Mustern gesucht, für welche optimierte Versionen in der Datenbank gespeichert sind. Diese Suche kann abhängig vom gegebenen Optimierungsziel sein, das z.B. eine möglichst schnelle Laufzeit auf einer Zielarchitektur, ein geringer Speicherbedarf, oder die SIMD (engl. für Single Instruction, Multiple Data) Parallelisierbarkeit (z.B. durch Vektorinstruktionen) ist.

Die Datenbank kann hierbei eine einfache Datenbank sein, oder aber teilweise oder ganz durch ein neuronales Netzwerk, z.B. ein komplexes Deep Neural Network repräsentiert werden.

In einem nächsten Schritt 130 werden die in der Datenbank gespeicherten bekannten optimierten Elemente aus der Datenbank für jedes identifizierte Element extrahiert, d.h. ausgelesen.

In einem nächsten Schritt 140 werden die in der Datenbank gefundenen Elemente evaluiert. Dabei können die gefundenen Elemente in den Gesamtcode eingebettet werden.

Das Evaluieren 140 kann hierbei ebenfalls mittels heuristischer Verfahren durchgeführt werden, beispielsweise durch evolutionäre Algorithmen, insbesondere genetischer Programmierung, oder mittels Machine Learning, Deep Learning, generative Deep Neural Networks, DNNs oder regelbasiert. Außerdem kann ein Optimierungsziel zuvor festgelegt werden, und dementsprechend den Detailgrad der Zerlegung des Zwischencodes bestimmen.

Ein Kontext bedeutet beispielsweise die erwarteten Eingaben und wie das betrachtete Programmsegment algorithmisch eingebettet ist. Das heißt, ob es ständig ausgeführt wird (z.B. in einer äußeren Schleife) oder ob es nur selten oder sehr selten ausgeführt wird. Im Falle der ständigen Ausführung kann es sinnvoll sein, gegebenenfalls vorhandenen Initialisierungscode auszulagern.

Falls das Evaluieren eine Optimierung des Zwischencodes indiziert, wird das optimierte Element aus der Datenbank in einem nächsten Schritt 145 das identifizierte Element im Zwischencode mit dem gefundenen optimierten Element aus der Datenbank ersetzt.

Das Verfahren fährt fort mit dem Schritt 150, in dem Elemente, die die optimiert werden können im Zwischencode gesucht werden, der nun möglichweise bereits die in Schritt 145 eingesetzten optimierten Elemente für bekannte Elemente beinhaltet.

Das Suchen 150 der Elemente kann hierbei ebenfalls mittels heuristischer Verfahren durchgeführt werden, beispielsweise durch evolutionäre Algorithmen, insbesondere genetischer Programmierung, oder mittels Machine Learning, Deep Learning, generative Deep Neural Networks, DNNs oder regelbasiert. Außerdem kann ein Optimierungsziel zuvor festgelegt werden, und dementsprechend den Detailgrad der Zerlegung des Zwischencodes bestimmen.

Bei der Suche muss sichergestellt sein, dass die neuen nun erzeugten Muster, die die Elemente ersetzen sollen, zum ursprünglichen Codeausschnitt funktional äquivalenten Code repräsentieren.

Das hierbei auftretende sogenannte Äquivalenzproblem ist allgemein nicht lösbar, d.h. die Äquivalenz von zwei Programmen ist im Allgemeinen nicht beweisbar. Es kann jedoch eine ausreichende Annäherung an eine Lösung gefunden werden, indem bei der Suche nach neuen Strukturen jeweils nur solche inkrementelle Schritte erlaubt sind, die die Äquivalenz erhalten. Hierzu kann beispielsweise eine Äquivalenztabelle realisiert werden, die in einer weiteren Datenbank oder in derselben Datenbank vorgehalten wird. Eine weitere Möglichkeit besteht darin, die Äquivalenz randomisiert und/oder empirisch nachzuweisen. Hierbei obliegt es dem Programmierer, die Korrektheit des Algorithmus durch gängige Methoden zu zeigen.

Auch werden neue Muster nur dann berücksichtigt, wenn sie einen Mehrwert im Sinne des Optimierungsziels erzeugen. Beispielsweise wird dies bereits durch die Fitnessberechnung während einer evolutionären Optimierung sichergestellt, da um den Fitnesswert zu erzeugen eine Evaluation des Musters notwendig ist. Dabei können die gefundenen Muster in den Gesamtcode eingebettet werden.

Anschließend werden die gefundenen Elemente bzw. Muster im Schritt 160 zu neuen optimierten Elementen optimiert. Optional kann das Optimieren in Schritt 160 ein Überprüfen 165 der funktionalen Äquivalenz der neuen optimierten Elemente zu den gefundenen Elementen beinhalten.

Die neuen optimierten Elemente werden dann im Schritt 170 im Kontext des Zwischencodes evaluiert. Damit wird sichergestellt, dass die in Schritt 150 gefundenen und möglicherweise im Schritt 165 als Teil für funktional äquivalent ermittelten Muster auch im Kontext des gesamten Zwischencodes den Anforderungen genügen. Diese Anforderungen sind zum einen syntaktische Korrektheit, Funktionale Äquivalenz im Kontext des gesamten Zwischencodes sowie Sicherstellung, dass das vordefinierte Optimierungsziel auch tatsächlich erreicht wird.

Das Evaluieren 170 kann hierbei ebenfalls mittels heuristischer Verfahren durchgeführt werden, beispielsweise durch evolutionäre Algorithmen, insbesondere genetischer Programmierung, oder mittels Machine Learning, Deep Learning, generative Deep Neural Networks, DNNs oder regelbasiert. Außerdem kann ein Optimierungsziel zuvor festgelegt werden, und dementsprechend den Detailgrad der Zerlegung des Zwischencodes bestimmen. Falls im Schritt 170 neue optimierte Elemente als den Bedingungen genügend evaluiert wurden, werden im Schritt 175 die jeweiligen im Schritt 150 gefundenen Elements mit dem entsprechenden neuen optimierten Element aus Schritt 170 im Zwischencode ersetzt.

Die Schritte 120 bis 145 und 150 bis 175 können jeweils als Schleife für alle in Schritt 120 identifizierten bzw. in Schritt 150 gefundenen Elemente nacheinander abgearbeitet werden. Die Schritte 120 bis 145 bzw. 150 bis 175 bilden hierbei jeweils eine Schrittgruppe, die Bestandteil einer Iteration ist.

Es ist aber auch eine Parallelisierung denkbar, bei der mehrere identifizierte bzw. gefundene Elemente gleichzeitig optimiert werden. Das jeweilige Evaluieren in Schritt 140 bzw. 170 kann dann serialisiert werden, z.B. in dem jede abgeschlossene Evaluierung mit dem Rest des gesamten Zwischencodes evaluiert wird. Alternativ können die identifizierten bzw. gefundenen Elemente in Ihrer im Code auftretenden Reihenfolge substituiert werden. Andere Reihenfolgen des Zusammenfügens des gesamten Codes mit den optimierten Elementen sind ebenfalls denkbar.

Auch kann das Verfahren von Schritt 120 bis 175 insgesamt als Schleife ablaufen, so dass entweder in jeder Iteration ein Element optimiert wird, oder so dass nach einer Optimierung von mehreren Elementen, ein weiterer Durchlauf neu, durch die vorherigen Optimierungen erzeugte, optimierbare Elemente identifizieren bzw. finden kann.

Außerdem können die Schrittgruppen in anderer Reihenfolge und/oder jeweils einzeln und/oder zusammen mehrfach durchlaufen werden können.

Abschließend wird in Schritt 180 der aus den vorherigen Schritten resultierenden Zwischencodes in einen Programmcode zurück umgewandelt.

Hierbei kann die Programmsprache der Ausgabe dieselbe sein, in der der Eingangscode vorgelegen ist. Es ist aber auch möglich, dass die Ausgabe in einer anderen Programmiersprache vorgenommen wird.

Optional kann in einem folgenden Schritt 190 der rückumgewandelte Programmcode in der Ausgabeprogrammiersprache auf einem Anzeigegerät angezeigt werden. Von da kann der Entwickler seine Arbeit fortsetzen.

Des Weiteren kann das Verfahren optional auch einen Schritt des Speicherns 200 der Ergebnisse des Evaluierens der neuen optimierten Elemente in der Datenbank umfassen. Außerdem kann das Verfahren optional auch einen Schritt des Speicherns 210 der Ergebnisse des Evaluierens der bekannten optimierten Elemente in der Datenbank umfassen.

Ein Beispiel könnte etwa wie folgt aussehen. Der Entwickler gibt als Eingabecode den folgenden Programmcode ein, der wie hier im Beispiel in der Sprache JAVA® vorliegen kann. Jede andere Sprache ist ebenfalls möglich, und das Beispiel dient nur als Veranschaulichung.

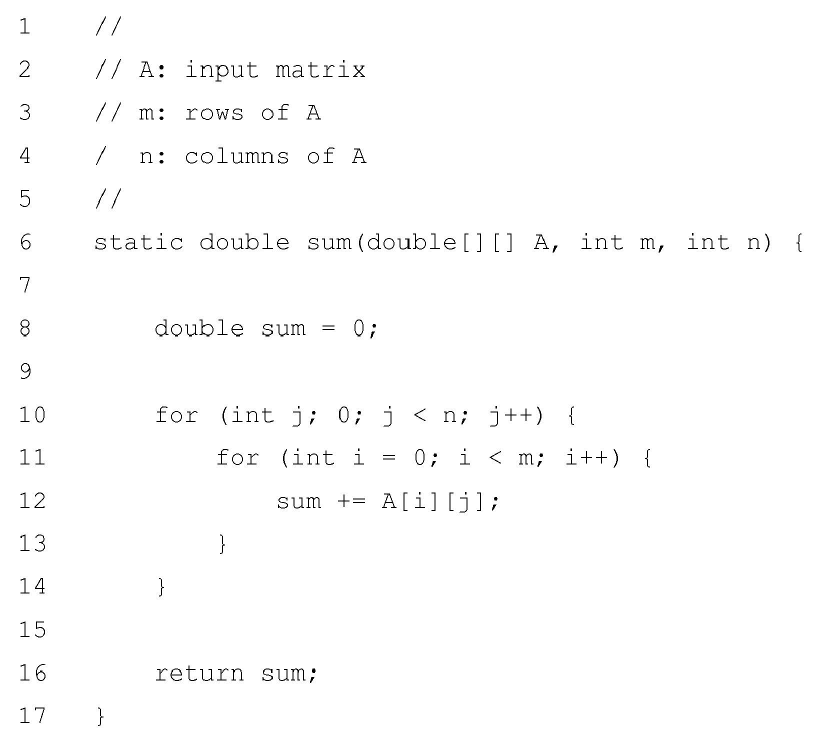

Der exemplarische JAVA®-ähnliche Code berechnet die Summe aller Komponenten einer Matrix. Erfindungsgemäß wird hier zunächst wird das Programm in eine abstrakte, strukturierte Repräsentation (und/oder in eine abstraktere, strukturierte Repräsentation) überführt. Unter anderem wird nun für nun die Substruktur der doppeltverschachtelten for-Schleife mit komponentenweisem Zugriff auf eine Matrix eine Suchanfrage an die Datenbank (z.B. ein neuronale Netz) gestellt.

Fall i: Die Struktur der doppeltverschachtelten for-Schleife mit komponentenweisem Zugriff auf eine Matrix ist in der Datenbank vorhanden und für das Optimierungsziel "allgemeine Laufzeitverbesserung" ist eine alternative Variante abgelegt. Bei einer vorherigen Optimierung (z.B. evolutionären Suche oder durch manuelle Eingabe eines Experten) zeigte sich, dass durch das Tauschen der Zeilen 10 und 11 der Code bei größeren Matrizen deutlich schneller läuft.

Fall ii: Die Struktur ist nicht bekannt. Mit einem vorgegebenen Kontingent an Rechenzeit könnte nun nach eine Modifikation der Struktur gesucht werden. Dies könnte beispielsweise mittels Genetischer Programmierung geschehen. Hierbei wird, vereinfacht ausgedrückt, in diesem evolutionären Verfahren der Raum der möglichen Strukturen (meist gegeben in Baumdatenstrukturen) durch Mutations- und Rekombinationsmechanismen exploriert. Durch eine zufällige Mutationsoperation wird die Reihenfolge der beiden for-Substrukturen getauscht und es stellt sich bei der anschließenden Fitnessevaluation heraus, dass diese Mutation vorteilhaft ist.

Diese Änderung beeinflusst den Code nicht funktional und ändert lediglich die Reihenfolge der Matrixzugriff und führt zu einer verbesserten Laufzeit. Dies ist auf ein günstigeres Cachingverhalten der CPU zurückzuführen, da der Speicher, in dem die Matrix liegt, nun sequentiell durchlaufen wird. Die modifizierte Struktur wird nun in der Datenbank für das ursprünglich Suchmuster hinterlegt (im Falle eines neuronalen Netzes, wird dieses entsprechend weiter trainiert) und kann in nachfolgenden Anfragen als Verbesserungsvorschlag (Fall i) gefunden werden.

Entsprechend wird als Ergebnis des Verfahrens oder des Systems dem Benutzer die folgende Veränderung zur Optimierung vorschlagen:

```
     10 for (int i = 0; i < m; i++) {
     11 for (int j; 0; j < n; j++) {
     13 }
     14 }
```

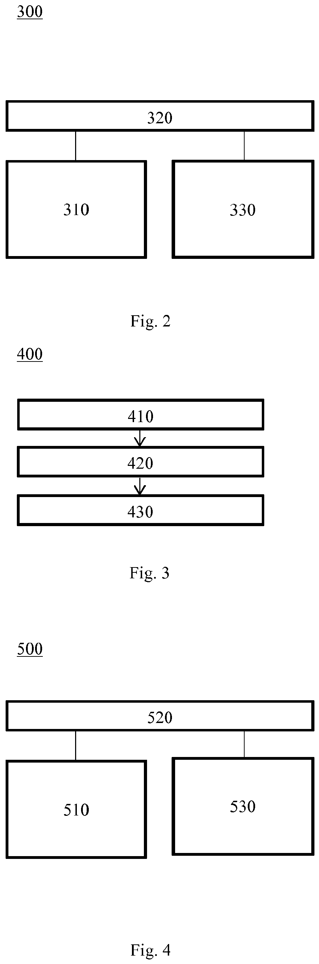

Gemäß einer Ausführungsform zeigt Fig. 2 ein System 300 zum Optimieren von Programmcode in einer Programmiersprache. Das System 300 umfasst hierbei mindestens eine Datenbank 310, mindestens einen Prozessor 320 und mindestens einen Speicher 330. Der Programcode, der zu optimieren ist, liegt hierbei in einem der Speicher 330 vor. Beispielsweise bei modularem Code, in dem verschiedene Teile eines Programmes in verschiedenen Dateien hinterlegt sind, können auch mehrere Speicher die Gesamtheit des Eingangscodes bereithalten. Auch in anderen Fällen kann der Eingangscode auf mehrere Speicher verteilt sein.

Der zu optimierende Programmcode kann zu Beginn erst in einen oder mehrere Speicher eingelesen werden. Ferner ist einer oder mehrere der Prozessoren dazu eingerichtet die Schritte des oben beschriebenen Verfahrens auszuführen. Insbesondere falls einige der Schritte parallelisiert werden, ist es von Vorteil wenn mehrere Prozessoren bereitstehen.

## Patentansprüche

1. Computerimplementiertes Verfahren (100) zum Optimieren von Programmcode in einer Programmiersprache, mit:
Umwandeln (110) des Programmcodes in Zwischencode in einer abstrakten Zwischensprache;
Identifizieren (120) von Elementen des Zwischencodes in der Zwischensprache anhand einer Datenbank, für die bekannte optimierte Elemente in der Datenbank gespeichert sind;
Extrahieren (130) eines bekannten optimierten Elementes aus der Datenbank für jedes identifizierte Element;
Evaluieren (140) der bekannten optimierten Elemente im Kontext des Zwischencodes;
falls das Evaluieren eine Optimierung des Zwischencodes indiziert, Ersetzen (145) des jeweiligen identifizierten Elements mit dem entsprechenden bekannten optimierten Element im Zwischencode;
Suchen (150) nach Elementen, die optimiert werden können;
Optimieren (160) der gefundenen Elemente zu neuen optimierten Elementen;
Evaluieren (170) der neuen optimierten Elemente im Kontext des Zwischencodes;
falls das Evaluieren eine Optimierung des Zwischencodes indiziert, Ersetzen (175) des jeweiligen gefundenen Elements mit dem entsprechenden neuen optimierten Element im Zwischencode; und
Rückumwandeln (180) des resultierenden Zwischencodes in Programmcode.

2. Verfahren (100) nach einem der vorherigen Ansprüche,
wobei das Verfahren weiterhin umfasst:
Anzeigen (190) des rückumgewandelten Programmcodes auf einem Anzeigegerät.

3. Verfahren (100) nach einem der vorherigen Ansprüche,
wobei die Zwischensprache programmiersprachenunabhängig ist.

4. Verfahren (100) nach einem der vorherigen Ansprüche,
wobei das Rückumwandeln (180) den resultierenden Zwischencode in die Ausgangssprache des Programmcode oder in eine andere Programmiersprache rückumwandelt.

5. Verfahren (100) nach einem der vorherigen Ansprüche,
wobei die Datenbank jeweils für Elemente bekannte optimierte Elemente enthält, die in der Datenbank vorzugsweise als funktional äquivalent zu den Elementen definiert sind.

6. Verfahren (100) nach einem der vorherigen Ansprüche,
wobei das Identifizieren (120), das Suchen (150), das Evaluieren (140) bekannter optimierter Elemente und/oder das Evaluieren (170) neuer optimierter Elemente mittels heuristischer Verfahren durchgeführt wird, vorzugsweise durch
evolutionäre Algorithmen, insbesondere genetischer Programmierung, oder mittels Machine Learning, Deep Learning, vorzugsweise durch generative Deep Neural Networks, DNNs, oder regelbasiert, und/oder
in Abhängigkeit von einem zuvor festgelegten Optimierungsziel.

7. Verfahren (100) nach einem der vorherigen Ansprüche,
wobei das Optimieren (160) der gefunden Elemente weiterhin umfasst:
Überprüfen (165) der funktionalen Äquivalenz der neuen optimierten Elemente zu den gefundenen Elementen, vorzugweise durch eine Fitnessberechnung.

8. Verfahren (100) nach einem der vorherigen Ansprüche,
wobei das Verfahren (100) weiterhin umfasst:
Speichern (200) der Ergebnisse des Evaluierens der neuen optimierten Elemente in der Datenbank, und/oder
Speichern (210) der Ergebnisse des Evaluierens der bekannten optimierten Elemente in der Datenbank.

9. Verfahren (100) nach einem der vorherigen Ansprüche,
wobei die Schritte:
Identifizieren (120) von Elementen;
Extrahieren (130) eines bekannten optimierten Elementes; und
Evaluieren (140) der bekannten optimierten Elemente und gegebenenfalls Ersetzen (145);
sowie die Schritte:
Suchen (150) nach Elementen;
Optimieren (160) der gefundenen Elemente; und
Evaluieren (170) der neuen optimierten Elemente und gegebenenfalls Ersetzen (175);
jeweils eine Schrittgruppe darstellen, wobei die Schrittgruppen in anderer Reihenfolge
und/oder jeweils einzeln und/oder zusammen mehrfach durchlaufen werden können.

10. System (300) zum Optimieren von Programmcode in einer Programmiersprache, mit:
mindestens einer Datenbank (310);
mindestens einem Prozessor (320); und
mindestens einem Speicher (330);
wobei der Programmcode in dem mindestens einem Speicher (330) gespeichert ist, und
wobei der Prozessor (320) dazu angepasst ist, um die Schritte des Verfahrens (100) nach einem der vorherigen Ansprüche auszuführen.

11. Computerimplementiertes Verfahren zum Trainieren eines Systems zum Optimieren von Programmcode in einer Programmiersprache, mit
Erhalten (410) von Ersetzungsdaten, bestehend aus zumindest einem Quellelement und einem Zielelement, wobei das Zielelement geeignet ist, das Quellelement in einem Programmcode zu ersetzen, so dass der Programmcode mindestens gleichwertig ist in Bezug auf mindestens ein Programcharakteristikum aus Laufzeit, Komplexität, und Speicherverbrauch, vorzugsweise aber dahingehend optimiert ist;
Erzeugen (420) mindestens eines Identifikationselementes für das Quellelement, das für ein Durchsuchen der Datenbank verwendet werden kann; und
Speichern (430) von Quellelement, Zielelement und Identifikationselement in einer Datenbank.

12. Verfahren nach Anspruch 11, wobei das Erhalten (410) von Ersetzungsdaten durch Benutzereingabe, durch systematische Exploration durch ein generatives neurales Netz oder durch metaheuristischer Exploration mittels genetischer Programmierung erfolgt; und/oder wobei das Identifikationselement geeignet ist für ein Durchsuchen in Form einer Ähnlichkeitssuche.

13. System (500) zum Trainieren eines Systems zum Optimieren von Programmcode in einer Programmiersprache, mit:
mindestens einer Datenbank (510);
mindestens einem Prozessor (520); und
mindestens einem Speicher (530);
wobei der Programmcode in dem mindestens einem Speicher (530) gespeichert ist, und
wobei der Prozessor (520) dazu angepasst ist, um die Schritte des Verfahrens (400) nach einem der Ansprüche 11 oder 12 auszuführen.

14. Computerprogramm, umfassend Befehle, die bei der Ausführung des Programms durch einen Computer diesen veranlassen, die Schritte des Verfahrens (100; 400) nach einem der Ansprüche 1 bis 9, 11 oder 12 auszuführen.

15. Computerlesbares Medium, auf dem das Computerprogramm nach Anspruch 14 gespeichert ist.
